Europäisches Patentamt

European Patent Office

Office européen des brevets

(19)

(11) Veröffentlichungsnummer: **0 044 918**
**B1**

(12)

# EUROPÄISCHE PATENTSCHRIFT

(45) Veröffentlichungstag der Patentschrift:
28.03.84

(21) Anmeldenummer: 81104055.9

(22) Anmeldetag: 27.05.81

(51) Int. Cl.³: **H 04 M 11/06**

(54) Schaltungsanordnung zum Auf- bzw. Abbau einer Datenverbindung.

(30) Priorität: 25.07.80 DE 3028236

(43) Veröffentlichungstag der Anmeldung:
03.02.82 Patentblatt 82/5

(45) Bekanntmachung des Hinweises auf die Patenterteilung:
28.03.84 Patentblatt 84/13

(84) Benannte Vertragsstaaten:
AT BE CH DE FR GB LI LU NL SE

(56) Entgegenhaltungen:
EP - A - 0 023 695
DE - A - 2 536 200
DE - B - 2 814 837
US - A - 3 959 778

TECHNISCHE MITTEILUNGEN AEG-TELEFUNKEN,
Band 69, Nr. 4, 1979, Seiten 136-140 Berlin, DE.
BAMBACH et al.: "Bildschirmtext-Beschreibung des
Teilnehmergerätes und der
Datenübertragungseinrichtung"
CONTROL ENGINEERING, Band 25, Nr. 12, Dezember
1978, Seiten 84,85 New York, U.S.A. BEASTON:
"Automatically restarting a microprocessor after power
failure"

(73) Patentinhaber: ANT Nachrichtentechnik GmbH,
Gerberstrasse 33, D-7150 Backnang (DE)

(72) Erfinder: Koeck, Klaus, Dipl.-Ing., Dunantstrasse 2,
D-7150 Backnang (DE)
Erfinder: Mikley, Frank, Ing. grad., Am Schillerplatz 7,
D-7150 Backnang (DE)
Erfinder: Ruopp, Gerhard, Dr.-Ing., Kiefernweg 7,
D-7150 Backnang (DE)
Erfinder: Bambach, Wolfgang, Dipl.-Ing., Sachsenweg 5,
D-7141 Oberstenfeld (DE)

(74) Vertreter: Schickle, Gerhard, Dipl.-Ing. et al, ANT
Nachrichtentechnik GmbH Patent- und Lizenzabteilung
Gerberstrasse 33, D-7150 Backnang (DE)

Schaltungsanordnung zum Auf- bzw. Abbau einer Datenverbindung

Die Erfindung betrifft eine Schaltungsanordnung zum Auf- bzw. Abbau einer Verbindung mit Hilfe einer Datenübertragungseinrichtung gemäss Oberbegriff des Hauptanspruchs.

Solche Anordnungen sind bekannt geworden beispielsweise als Bildschirmtextmodem bei der Entwicklung und Planung des zukünftigen neuen Dienstes Bildschirmtext, wobei stellvertretend zitiert seien die deutschen Offenlegungsschriften Nrn. 2823283, 2840845, 2942441 und der Aufsatz „Funktion der Teilnehmereinrichtungen für Bildschirmtext" von Bambach, Koeck, Schüssler in Fernmeldepraxis Bd. 56/1979, Nr. 24.

Derartige Bildschrimtextmodems, die mit automatischer Wähleinrichtung versehen sind, gestatten zusammen mit einem Fernsehgerät, das für Bildschirmtextempfang eingerichtet ist, dem Inhaber oder Benutzer eines Fernsprechanschlusses den Konsum des neuen Dienstes Bildschirmtext über seine Fernsprechanschlussleitung, wobei Fernsprechen und Bildschirmtextempfang nur wahlweise möglich sind.

Die Bildschirmtextmodems müssen aufgrund einer Forderung der Deutschen Bundespost eine netzunabhängige Stromversorgung aufweisen, deshalb werden sie über die Fernsprechanschlussleitung gespeist.

Beim Aufbau einer Bildschirmtextverbindung können kurzzeitige Speisestromunterbrechungen bzw. -einbrüche auftreten, die dazu führen können, dass der Verbindungsaufbau gestört wird und evtl. vom Teilnehmer erneut gestartet werden muss. Je nach Verweildauer des einzelnen Teilnehmers in einem solchen Fall, können hierdurch wichtige Organe der Vermittlungseinrichtungen unnötig lange belegt werden. Besonders wichtig ist dieser Aspekt bei Einsatz von Bildschirmtextmodems in Nebenstellenwählanlagen.

Die Erfindung hat sich deshalb zur Aufgabe gestellt, eine Schaltungsanordnung der obengenannten Art anzugeben, die es bei kleinem Aufwand gestattet, nach Speisestromunterbrechungen die Aufgabe einer Verbindung erfolgreich weiterzuführen oder selbsttätig einen neuen Aufbau zu starten.

Die Lösung dieser Aufgabe erfolgt mit den in den Patentansprüchen angegebenen Mitteln.

Zwar wurde schon vorgeschlagen, den Energiespeicher für die Stromversorgung der Datenübertragungseinrichtung zu vergrössern. Die erforderliche Vergrösserung würde jedoch mindestens eine bis zwei Grössenordnungen betragen, um auch die langen, bis zu einigen Sekunden betragenden Stromunterbrechungen bei der Amtsanlassung in Nebenstellenanlagen zu überbrücken, und einen grossen Platzbedarf beanspruchen. Auch wurde schon vorgeschlagen, die Datenübertragungseinrichtung vom Wechselspannungsnetz zusätzlich mit Strom zu versorgen. Dies hat jedoch den Nachteil, dass aufwendige Blitzschutzmassnahmen getroffen werden müssen.

Durch die Europäische Patentanmeldung Nr. 0023695 (veröffentlicht am 11.2.81) ist eine Schaltungsanordnung zum Überwachen einer Eingangsspannung bekannt geworden, wobei mittels Fühler das Unterschreiten eines bestimmten Eingangsspannungswertes gemeldet wird und wobei in Abhängigkeit von der Dauer des Spannungseinbruchs ein wenig Strom verbrauchender Ruhezustand eingestellt wird, indem die mittels Energiespeicher von der Eingangsspannung gepufferte Betriebsspannung für die Verbraucher abgeschaltet wird, und wobei nach Aufhebung des Eingangsspannungseinbruchs, der Normalbetriebszustand wiederhergestellt wird.

Die erfindungsgemässe Lösung bietet die Vorteile, dass bei wenig Aufwand, unter Umgehung eines voluminösen Energiespeichers, in energiesparender Weise nach Unterbrechungen des speisenden Schleifenstromes der Aufbau einer Datenverbindung in kürzest möglicher Zeit erfolgreich zu Ende geführt oder neu gestartet wird, ohne dass zentrale Vermittlungseinrichtungen unnötig lange belegt sind.

Im folgenden wird die Erfindung anhand der Figuren beschrieben.

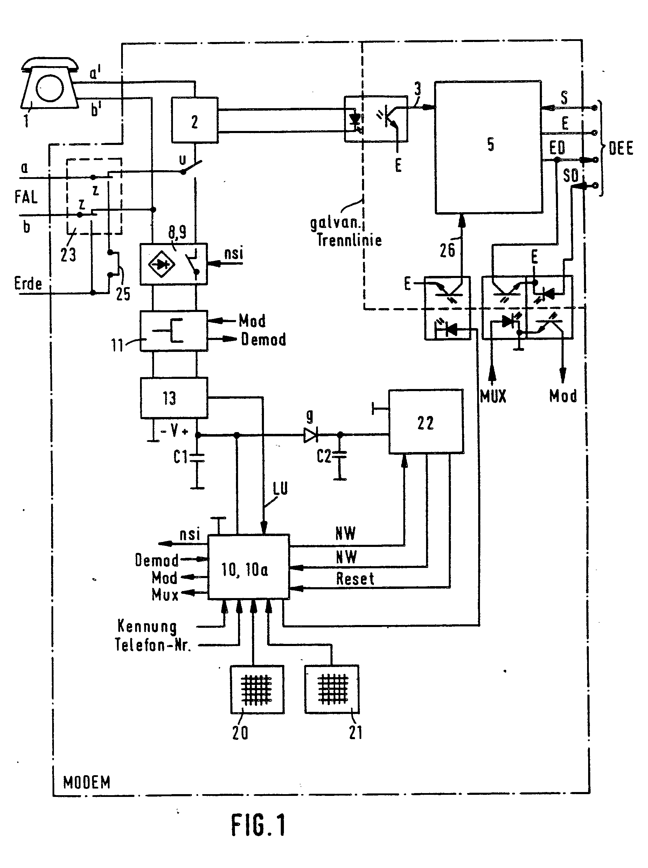

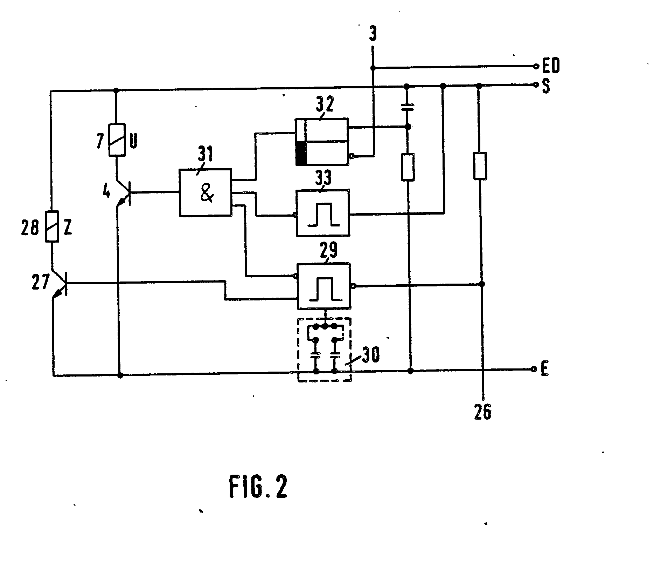

Die Fig. 1 zeigt ein Funktionsschaltbild eines Bildschirmtextmodems und die Fig. 2 weitere Einzelheiten der Leitungsanschalteinrichtung.

Der strichpunktierte Block der Fig. 1 umfasst einen Bildschirmtextmodem, der auch für den Einsatz in Nebenstellenanlagen geeignet ist und der an die Adern a, b der Fernsprechanschlussleitung FAL und gegebenenfalls Erde angeschlossen ist, der über die Adern a', b' mit dem Telefonapparat 1 und der über die vier Leitungen Steuerung und Stromversorgung S, Empfangsdaten ED, Sendedaten SD und Rückleitung E mit der Datenendeinrichtung DEE (hier Bildschirmtextgerät) verbunden ist. Der Bildschirmtextmodem enthält die Leitungsanschalteinrichtung 5, die vom Bildschirmtextgerät gespeist wird, sowie die folgenden, über die Fernsprechanschlussleitung FAL gespeisten Funktionsblöcke: Sprechschleifentesteinrichtung 2, Verpolungsschutz und Wählschalter 8, 9, Weiche 11, Stromversorgungsschaltung 13 zur Gewinnung der Versorgungsspannung aus dem Schleifenstrom, Ablaufsteuerung mit automatischer Wähleinrichtung 10, 10a, Demodulator DEMOD, Modulator MOD, Multiplexeinrichtung MUX sowie Kennungs- und Telefonnummern-Speicher. Weitere für die Erfindung unwesentliche Blöcke sind in Fig. 1 nicht wiedergegeben.

Die erfindungsgemässe Speichereinrichtung 22 zur Abspeicherung der Betriebszustände der Datenübertragungseinrichtung ist über einen Gleichrichter g und einen Ladekondensator C2 an den Ausgang der Stromversorgung 13 und über die Steuerleitungen NW, NW und Reset mit der Steuerung 10 verbunden.

Die Funktionsweise der Schaltung ist folgende. Wenn durch Betätigung der Taste Wählen am Fernbedienungsgeber des Datenendgerätes DEE eine Verbindung aufgebaut werden soll, wird über die Leitung S Speisespannung an die Leitungsanschalteinrichtung 5 gelegt, die somit mittels Sprechschleifentesteinrichtung 2, deren Ausgang mittels Optokoppler an die zum Eingang der Leitungsanschalteinrichtung 5 führende Leitung 3 verbunden ist, feststellen kann, ob der Fernsprechanschluss belegt ist oder nicht. Bei belegtem Anschluss wird innerhalb von 1,5 s nach Setzen von S von der Sprechschleifentestschaltung 2 ein Signal erzeugt, das von der Leitungsanschalteinrichtung 5 zur Datenendeinrichtung DEE übertragen, dort ausgewertet wird und zur Abschaltung von S führt. Bei freiem Anschluss wird der Modem angeschaltet, indem ein Umschaltrelais U der Leitungsanschalteinrichtung 5 erregt wird und die Ader a über den Umschaltkontakt u des genannten Relais an den Schleifeneingang des Verpolungsschutzes 8 bzw. der Wählkontakteinrichtung nsi 9 gelegt wird. Nach Aufbau der Betriebsspannung erfolgt die Verbindungsaufbauprozedur, wobei nach einer kurzen Wartezeit durch die Steuerung 10 bzw. durch die Wähleinrichtung 10a die Ziffern einer oder gegebenenfalls mehrerer zehnstelligen Rufnummern aus dem Telefonnummern-Speicher bereitgestellt und Wählimpulse für den nsi-Kontakt erzeugt werden. Nach Abschluss des Verbindungsaufbaus werden verschiedene Hörtöne sowie Modemkennungen und Codewörter zwischen angewählter Bildschirmtextzentrale und Bildschirmtextmodem ausgetauscht und nach positivem Prüfungsergebnis ein Datentransfer ermöglicht.

Findet nun während des Verbindungsaufbaues eine Unterbrechung oder ein Einbruch des Schleifenstromes statt, so wird dies von der Stromversorgung 13 über die Leitung LU an die Steuerung 10 gemeldet, die eine kurze Zeit lang (in der Grössenordnung 200 ms) durch den Kondensator C1 weiterversorgt wird. In dieser Zeit wird durch die Ablaufsteuerung 10 über die Leitung NW in der Speichereinrichtung 22 der betreffende Betriebszustandsspeicher gesetzt. Anschliessend wird die Ablaufsteuerung 10 durch die Speichereinrichtung 22 über die Leitung Reset in einen definierten Grundzustand versetzt, um Fehlfunktionen infolge des Spannungszusammenbruchs am Kondensator C1 bzw. an der Ablaufsteuerung 10 zu verhindern. Bei Spannungswiederkehr wird das Signal Reset durch die Speichereinrichtung 22 wieder zurückgenommen. Danach werden durch die Ablaufsteuerung 10 die Betriebszustandsspeicher der Speichereinrichtung 22 abgefragt und erstere in den eingespeicherten Ausgangsbetriebszustand zurückversetzt.

In einer Ausgestaltung der Erfindung sind der Ladekondensator C2 und entsprechende Schaltmittel am Eingang der Speichereinrichtung 22, die vorteilhafterweise aus CMOS-Schaltkreisen besteht, so dimensioniert, dass die Betriebszustandsspeicher bei Überschreitung einer bestimmten einstellbaren Leitungsunterbrechungszeit (beispielsweise 10 s) automatisch in den Anfangsbetriebszustand zurückversetzt werden, wodurch ein erneuter Verbindungsaufbau ermöglicht wird.

Dies gestattet auch den Einsatz der erfindungsgemässen Anordnung in Nebenstellenanlagen, bei denen vor der eigentlichen Wahl des Fernteilnehmers eine Amtsanlassung zu erfolgen hat. Dabei gibt es drei gebräuchliche Amtsanlassungsprozeduren:

1. Wahl einer oder mehrerer Kennziffern,
2. Betätigung einer Erdtaste,
3. Betätigung einer sog. Flashtaste.

Zur Auswahl und Einstellung der entsprechenden Amtsanlassungsprozedur ist erfindungsgemäss eine Auswahlanordnung 20 vorgesehen. Diese Auswahlanordnung kann vorteilhafterweise als Auswahlmatrix mit Drahtbrücken oder Schaltern realisiert sein. Die Ablaufsteuerung 10 ist mit dieser Auswahlanordnung 20 verbunden und erzeugt bei einem Datenverbindungswunsch die entsprechenden Betriebszustandsschritte. Vorteilhafterweise ist die Steuerung 10 als Mikroprozessorsteuerung mit PROM- bzw. EPROM-Speicher realisiert, wodurch der Stromverbrauch des Modems sehr niedrig gehalten werden kann.

Bei Einsatz des erfindungsgemässen Modems in Nebenstellenanlagen mit der ersten Amtsanlassungsprozedur ist in einer Ausgestaltung ein Speicher 21 zur Einspeicherung von Kennziffern- bzw. Pausenfolgen vorgesehen. Die Kennziffern- bzw. Pausenfolgen können jedoch auch in dem an sich schon vorhandenen Speicher für Telefonnummern abgelegt werden, wodurch nur wenige zusätzliche Betriebszustandsschritte in der Ablaufsteuerung 10 erforderlich sind, da dann die Kennziffernvorwahl in der gleichen Weise wie die Wahl der Telefonnummer des Fernteilnehmers erfolgen kann.

Bei Einsatz der erfindungsgemässen Anordnung in Nebenstellenanlagen mit Amtsanlassung durch Erdtastenbetätigung, wobei die beiden Adern a und b mit Erde verbunden werden, sind zwei Relaisschaltkontakte z vorgesehen, die als Umschalte- bzw. Arbeitskontakte realisiert sein können.

In Fig. 1 ist eine Ausführung als Umschalter 23 gezeichnet. Die Relaiskontaktlösung wird deshalb einer Halbleiterstruktur beispielsweise einem selbstsperrenden Feldeffekttransistor oder einem VMOS-Element vorgezogen, weil erstens der Relaiskontakt ein idealer Kurzschlusskontakt mit einem Widerstand von 1 darstellt, weil zweitens das Problem des zusätzlichen Blitzschutzes für die Halbleiterelemente entfällt und drittens, weil ein Relais gleichzeitig die erforderliche galvanische Trennung mit sich bringt, wenn sein Erregerstrom von der Leitungsanschalteinheit 5 und damit vom Bildschirmtextgerät d.h. also nicht vom Amt geliefert wird, so dass ein zusätzlicher Optokoppler zwischen Amtsschleife und Leitungsanschalteinheit 5 entfallen kann.

Das oben Gesagte gilt ebenfalls für die Amtsanlassungsprozedur durch Flashtastenbetätigung, wodurch der Schleifenstrom eine definierte Zeit (beispielsweise 80 ms) unterbrochen wird. Diese Schleifenunterbrechung wird erfindungsgemäss ebenfalls mit einem Relaiskontaktpaar z durchgeführt, wobei bei der Realisierung als Umschaltekontaktblock 23 der Fig. 1 die Brücke 25 aufgetrennt werden muss.

In Fig. 2 ist die Leitungsanschalteeinrichtung 5 nach Fig. 1 detaillierter dargestellt. Sie enthält im wesentlichen ein FL, zwei Monoflops 33 und 29, ein UND-Verknüpfungsglied 31, dessen drei Eingänge mit dem Ausgang des Flip-Flops 32 bzw. mit den negierten Ausgängen der beiden Monoflops 33 und 29 verbunden sind, das Relais U, 7, mit einem in Reihe geschalteten Schalttransistor 4, dessen Basis durch den Ausgang des UND-Gliedes 31 angesteuert wird, und dem Relais Z, 28, mit einem ebenfalls in Reihe geschalteten Transistor 27, dessen Basis vom Normalausgang des zweiten Monoflops 29 angesteuert wird.

Die Schaltung funktioniert wie folgt. Soll eine Verbindung aufgebaut werden, so wird über die Steuerung und Stromversorgungsleitung S bzw. den Rückleiter E Spannung an die Leitungsanschalteeinrichtung gelegt. Dadurch werden das Flip-Flop 32 gesetzt und das Monoflop 33 getriggert. Bei belegtem Anschluss wird innerhalb 1,5 s nach Setzen von S von der Sprechschleifentestschaltung 2 ein Impuls erzeugt, der über 3 das Flip-Flop 32 zurücksetzt. Ist dagegen der Anschluss frei, so wird nach Ablauf der Monoflop-33-Zeit auch der dritte Eingang des UND-Gliedes 31 gesetzt, wodurch der Schalttransistor 4 vom Ausgang des UND-Gliedes 31 leitend gesteuert und das Umschaltrelais U erregt wird.

Bei den Amstanlassungsprozeduren Erd- bzw. Flashtaste wird von der Ablaufsteuerung 10 über einen Optokoppler auf den negierten Eingang 26 des zweiten Monoflops 29 ein kurzer Triggerimpuls gegeben, wodurch der Schalttransistor 27 durch den Ausgang des zweiten Monoflops 29 angesteuert und das Relais Z erregt wird. Gleichzeitig wird über den negierten Ausgang des zweiten Monoflops 29 die UND-Bedingung am UND-Verknüpfungsglied 31 aufgehoben, wodurch das Umschaltrelais U abfällt. Dies hat den Vorteil, dass der vom Bildschirmtextendgerät gelieferte Strom voll dem Erd- bzw. Flashtastensimulationsrelais Z zur Verfügung gestellt werden kann. Dies ist deshalb von grosser Bedeutung, da auf der Steuerleitung S lediglich eine Spannung von 4 V zugelassen ist, wodurch die angebotene Schaltleistung eng begrenzt ist.

Nach Beendigung der mittels Kondensatoren und Brücken in einer Einstellvorrichtung 30 variierbaren Schaltzeit des zweiten Monoflops 29 wird das Relais Z wieder ab- und das Umschaltrelais U entsprechend zugeschaltet.

Selbstverständlich bleibt die erfindungsgemässe Anordnung nicht beschränkt auf eine einzige Erdtastensimulation, sondern es können bei entsprechender Einstellung der Ablaufsteuerung 10 beispielsweise auch zwei durch eine definierte Pause getrennte Erdtastensimulationen für eine Amtsanlassung durchgeführt werden.

## Patentansprüche

1. Schaltungsanordnung zum Auf- bzw. Abbau einer Verbindung mit einer Datenübertragungseinrichtung (MODEM), die an die Teilnehmerleitung (FAL) eines Wählnetzes anschaltbar ist und die eine Teilnehmerschleifen-Prüfeinrichtung (2), eine vom Datenendgerät (DEE) gespeiste Leitungsanschalteeinrichtung (5), eine automatische Wähleinrichtung (10a), eine über die Leitung (FAL) speisbare Stromversorgung (13) und eine Steuerung (10) zur Durchführung und Überwachung des Ablaufs der einzelnen Betriebszustände enthält, dass eine Speichereinrichtung (22) zur Abspeicherung eines augenblicklichen Betriebszustandes der Datenübertragungseinrichtung vorgesehen ist, dadurch gekennzeichnet, dass nach Einbrüchen bzw. Unterbrechungen des speisenden Schleifenstromes der Inhalt der Speichereinrichtung (22) durch die Steuerung (10) wieder ausgelesen wird, dass anhand des Speicherinhaltes durch die Steuerung (22) festgestellt wird, welches der zuletzt ausgeführte Betriebszustand ist und dass anschliessend diejenigen Betriebszustände ausgeführt werden, die zum weiteren Aufbau der Datenverbindung erforderlich sind.

2. Schaltungsanordnung nach Anspruch 3, dadurch gekennzeichnet, dass das Auslesen zeitverzögert erfolgt.

3. Schaltungsanordnung nach einem der vorhergehenden Ansprüche, gekennzeichnet durch die Verwendung bei der Amtsanlassung in Nebenstellenanlagen.

4. Schaltungsanordnung nach Anspruch 3, dadurch gekennzeichnet, dass eine Auswahlanordnung (20) zur Einstellung der Amtsanlassung vorgesehen ist.

5. Schaltungsanordnung nach Anspruch 4, dadurch gekennzeichnet, dass bei der Amtsanlassung mit Kennziffernwahl ein Speicher (21) vorgesehen ist zur Einspeicherung von Kennziffern- bzw. Pausenfolgen.

6. Schaltungsanordnung nach Anspruch 5, dadurch gekennzeichnet, dass die Kennziffernwahl durch die automatische Wähleinrichtung (10a) erfolgt.

7. Schaltungsanordnung nach Anspruch 4, dadurch gekennzeichnet, dass bei Amtsanlassung mit Erd- oder Flashtastenbetätigung Schaltmittel (27, 28, 23) und ein Zeitglied (29) in der Leitungsanschalteeinrichtung (5) derart vorgesehen sind, dass die Leitungsadern (a, b) eine einstellbare Zeit an Erde geschaltet oder aufgetrennt werden, wenn von der Steuerung (10) ein Startimpuls an das Zeitglied (29) abgegeben wird.

8. Schaltungsanordnung nach Anspruch 7, dadurch gekennzeichnet, dass während der Betätigung der Schaltmittel (27, 28, 23) die Stromzufuhr zum Umschaltrelais (U) der Leitungsanschalteeinrichtung (5) unterbrechbar ist.

9. Schaltungsanordnung nach einem der vorhergehenden Ansprüche, dadurch gekennzeichnet, dass die Speichereinrichtung (22) durch den Schleifenstrom pufferbar ist.

## Claims

1. Circuit arrangement for the setting-up or releasing of a connection with a data transmission equipment (MODEM), which is connectable to the subscriber line (FAL) of a selecting network and contains a subscriber loop test equipment (2), a line switch-on equipment (5) fed from the data terminal device (DEE), an automatic selecting equipment (10a), a current supply (13) feedable by way of the line (FAL) and a control (10) for the performance and monitoring of the course of the individual operational states, characterised thereby, that a storage equipment (22) is provided for the storing of an instantaneous state of the data transmission equipment, that the content of the storage equipment (22) is read out again through the control (10) after disruptions or interruptions of the loop current to be fed, that it is ascertained through the control (22) by reference to the storage content which is the last executed operational state, and that those operational states are executed following thereupon, which are required for the further setting-up of the data connection.

2. Circuit arrangement according to claim 1, characterised thereby, that the read-out takes place delayed in time.

3. Circuit arrangement according to one of the preceding claims, characterised by the use in the case of the exchange initiation in auxiliary exchange installations.

4. Circuit arrangement according to claim 3, characterised thereby, that a selection arrangement (20) is provided for the setting of the exchange initiation.

5. Circuit arrangement according to claim 4, characterised thereby, that in the case of the exchange initiation with prefix digit selection, a store (21) is provided for the storage of prefix digit and pause sequences.

6. Circuit arrangement according to claim 5, characterised thereby, that the prefix digit selection takes place through the automatic selecting equipment (10a).

7. Circuit arrangement according to claim 4, characterised thereby, that in the case of the exchange initiation with earth or flash key actuation, switch means (27, 28, 23) and a timing member (29) are provided in the line switch-on equipment (5) in such a manner that the line cores (a, b) are switched to earth or opened for a settable time when a starting pulse is delivered from the control (10) to the timing member (29).

8. Circuit arrangement according to claim 7, characterised thereby, that the current feed to the change-over relay (U) of the line switch-on equipment (5) is interruptible during the actuation of the switch means (27, 28, 23).

9. Circuit arrangement according to one of the preceding claims, characterised thereby, that the storage equipment (22) is bufferable by the loop current.

## Revendications

1. Circuit pour l'établissement et la libération d'une liaison de données avec un modem (MODEM), connectable à la ligne d'abonné (FAL) d'un réseau automatique et comprenant un dispositif de test de boucle d'abonné (2), un dispositif de connexion de ligne (5) alimenté par le terminal (DEE), un sélecteur automatique (10a), une alimentation (13) alimentée par la ligne (FAL) et une commande (10) pour l'exécution et la surveillance du déroulement des divers états, ledit circuit étant caractérisé en ce qu'un dispositif de mémoire (22) est prévu pour mémorisation d'un état instantané du modem; la commande (10) lit de nouveau le contenu du dispositif de mémoire (22) après des baisses ou des interruptions du courant de boucle d'alimentation; la commande (10) détermine, à l'aide du contenu de la mémoire, le dernier état réalisé, et les états nécessaires à la poursuite de l'établissement de la liaison de données sont ensuite réalisés.

2. Circuit selon la revendication 1, caractérisé par une temporisation de la lecture.

3. Circuit selon l'une des revendications 1 ou 2, caractérisé par son utilisation pour l'appel du central dans des installations à postes supplémentaires.

4. Circuit selon la revendication 3, caractérisé par un sélecteur (20) pour le réglage de l'appel du central.

5. Circuit selon la revendication 4, caractérisé en ce que, dans le cas de l'appel du central par numérotation d'indicatifs, une mémoire (21) est prévue pour la mémorisation de séquences d'indicatifs et d'intervalles de repos.

6. Circuit selon la revendication 5, caractérisé en ce que la numérotation d'indicatifs est effectuée par le sélecteur automatique (10a).

7. Circuit selon la revendication 4, caractérisé en ce que, dans le cas de l'appel du central par enfoncement d'une touche de terre ou à contact fugitif, des moyens de commutation (27, 28, 23) et un opérateur temporel (29) sont prévus dans le dispositif de connexion de ligne (5) de façon que les conducteurs de ligne (a, b) soient connectés à la terre ou déconnectés pendant un temps réglable quand la commande (10) délivre une impulsion de départ à l'opérateur temporel (29).

8. Circuit selon la revendication 7, caractérisé en ce que l'alimentation en courant du relais inverseur (U) du dispositif de connexion de ligne (5) peut être interrompue pendant la manœuvre des moyens de commutation (27, 28, 23).

9. Circuit selon l'une des revendications 1 à 8, caractérisé en ce que le courant de boucle peut tamponner le dispositif de mémoire (22).

FIG.1

FIG. 2